# EUROPÄISCHE PATENTSCHRIFT

(11) **EP 2 147 496 B1**
(45) Veröffentlichungstag und Bekanntmachung des Hinweises auf die Patenterteilung: **30.05.2018**
(21) Anmeldenummer: 08717695.4
(22) Anmeldetag: 12.03.2008
(51) Int. Cl.: F16H 57/021, E05F 15/689, F16H 1/16, H02K 5/167, H02K 7/08

(54) **STELLANTRIEB SOWIE FENSTERHEBEEINRICHTUNG**
ACTUATOR AND WINDOW LIFTING DEVICE
MÉCANISME DE COMMANDE ET SYSTÈME DE LÈVRE-VITRE

(30) Priorität: 08.05.2007 DE 102007021478
(43) Veröffentlichungstag der Anmeldung: 27.01.2010
(73) Patentinhaber: Robert Bosch GmbH, 70442 Stuttgart (DE)
(72) Erfinder: KAESHAMMER, Daniel, 77815 Buehl (DE); HERTWECK, Volker, 76532 Baden-baden (DE); WEBER, Alexej, 77855 Achern (DE)
(86) Internationale Anmeldenummer: PCT/EP2008/052949
(87) Internationale Veröffentlichungsnummer: WO 2008/135302

(56) Entgegenhaltungen:
- EP-A- 0 082 375
- EP-A- 1 369 319
- WO-A-2007/000378
- DE-A1- 1 675 556
- DE-A1- 3 804 219
- US-A- 5 605 071

## Beschreibung

### Stand der Technik

Die Erfindung betrifft einen Stellantrieb, insbesondere für eine Fensterhebereinrichtung in einem Kraftfahrzeug. Ferner betrifft die Erfindung eine Fensterhebereinrichtung gemäß dem Anspruch 11.

Aus der DE 38 04 219 A1 ist bereits ein Stellantrieb bekannt, bei dem außerhalb des Elektromotors und unmittelbar benachbart zu einer Getriebeschnecke eine Anlauffläche angeordnet ist, die der Auslenkung der Motorwelle während des Betriebes entgegenwirkt, um stabile Eingriffsverhältnisse zwischen einer Getriebeschnecke und einem mit der Getriebeschnecke kämmenden Getrieberad zu gewährleisten. Dabei wird durch die Anlauffläche, neben den stabilen Eingriffsverhältnissen, insbesondere eine Reduzierung der Lagerreibung an einem zwischen der Getriebeschnecke und dem Antriebsmotor auf der der Anlauffläche abgewandten Seite angeordneten Lager erzielt, da eine radiale Auslenkung der Getriebeschnecke aufgrund der Anlauffläche minimiert bzw. vermieden wird.

Insbesondere wenn der Stellantrieb in einer Fensterhebereinrichtung in einem Kraftfahrzeug eingesetzt wird, muss der Stellantrieb selbsthemmend ausgebildet sein, um zu verhindern, dass sich eine Fensterscheibe in einer Fahrzeugtür infolge der Schwerkraft ungewollt nach unten bewegt. Dabei muss ein Mindestmaß an Selbsthemmung über die gesamte Lebensdauer des Stellantriebes aufrecht erhalten werden, wobei jedoch Einlaufeffekte die Selbsthemmung im Laufe der Zeit stark reduzieren. Durch immer leichtgängigere Stellantriebe wird die Selbsthemmfunktion in der Praxis weitgehend auf den elektrischen Antriebsmotor abgewälzt. Zur Erzielung einer ausreichenden und dauerhaften Selbsthemmung werden zusätzliche kostenintensive innermotorische Komponenten, wie Kupplungen oder Schlingfedern eingesetzt. Zusätzlich oder alternativ kommen Spezialfette zum Einsatz, die eine hohe Haftreibung und gleichzeitig eine geringe Gleitreibung sicherstellen.

### Offenbarung der Erfindung

### Technische Aufgabe

Der Erfindung liegt die Aufgabe zugrunde, einen Stellantrieb, insbesondere für eine Fensterhebereinrichtung in einem Kraftfahrzeug vorzuschlagen, bei dem auf einfache Weise eine ausreichende und dauerhafte Selbsthemmung realisiert ist. Ferner liegt der Erfindung die Aufgabe zugrunde, eine entsprechend verbesserte Fensterhebereinrichtung vorzuschlagen.

### Technische Lösung

Hinsichtlich des Stellantriebes wird die Aufgabe mit den Merkmalen des Anspruchs 1 und hinsichtlich der Fensterhebereinrichtung mit den Merkmalen des Anspruchs 11 gelöst. Vorteilhafte Weiterbildungen der Erfindung sind in den Unteransprüchen angegeben.

Der Erfindung liegt die Erkenntnis zugrunde, dass für eine Vielzahl von Anwendungen, insbesondere für solche bei denen der Stellantrieb Teil einer Fensterhebereinrichtung in einem Kraftfahrzeug ist, die Selbsthemmung des Stellantriebes unzureichend ist, wenn sich die Motorankerwelle an der dem Polgehäuse zugeordneten ersten Anlauffläche abstützt. Dies ist in Fensterhebereinrichtungen üblicherweise der Fall, wenn mittels des Stellantriebs eine Fensterscheibe angehoben, also geschlossen wird. Weiterhin hat die Erfindung erkannt, dass die Selbsthemmung des Stellantriebes dadurch erhöht werden kann, wenn auf das axial zwischen der ersten Anlauffläche und dem Motoranker angeordnete erste Lager eine in Bezug auf die Längsmittelachse der Motorankerwelle radiale Lagerkraftkomponente wirkt, wobei das erste Lager in einem Fortsatz des Polgehäuses aufgenommen ist, wobei die erste Anlauffläche an einem schrägen Boden des Fortsatzes vorgesehen ist. Je größer diese Lagerkraftkomponente ist, desto größer ist die Lagerreibung, und damit die Selbsthemmung des Stellantriebs. Um auf einfachste Weise eine derartige, quer zur Längsmittelachse der Motorankerwelle auf das erste Lager wirkende Lagerkraftkomponente zu generieren, schlägt die Erfindung vor, die dem Polgehäuse zugeordnete erste Anlauffläche räumlich derart anzuordnen und/oder auszuformen, dass aufgrund der auf die Anlauffläche von der Motorankerwelle ausgeübte Axialkraft eine Reaktionskraft wirkt, die aufspaltbar bzw. zerlegbar ist in eine auf die Anlauffläche wirkende Normalkraftkomponente und eine auf das, insbesondere ausschließlich als Radiallager ausgebildete erste Lager wirkende Lagerkraftkomponente. Da eine derart ausgebildete Anlauffläche unanfällig gegen Verschleißerscheinungen ist, insbesondere wenn diese aus Metall ausgebildet ist, ist die Selbsthemmung des Stellantriebes über dessen Lebensdauer garantiert. Durch Variation der Anordnung bzw. Ausformung der ersten Anlauffläche kann die Größe der Lagerkraftkomponente und damit die Größe der Selbsthemmung festgelegt werden. Aufgrund des erfinderischen Konzepts wird auf einfache Weise eine ausreichende Selbsthemmung des Stellantriebs realisiert. Bevorzugt wird die Größe der Selbsthemmung so gewählt, dass auf innermotorische Komponenten, wie beispielsweise eine Kupplung und/oder eine Schlingfeder verzichtet werden kann. Ebenso ist es denkbar, auf die kostenintensiven Spezialfette mit hoher Haft- und geringer Gleitreibung zu verzichten.

Erfindungsgemäß ist vorgesehen, dass die erste Anlauffläche eben, d.h. plan ausgeformt ist und in Bezug auf die Längsmittelachse der Motorwelle geneigt ist. Anders ausgedrückt schließt die erste Anlauffläche mit der Motorankerwelle einen Winkel von ungleich 90° ein. Je stärker der Winkel zwischen der Anlauffläche und der Längsmittelachse der Motorankerwelle von 90° abweicht, umso größer ist die auf das erste Lager wirkende radiale Lagerkraftkomponente und damit die Selbsthemmung des Stellantriebs. Da die Neigungsrichtung (Raumrichtung) für die Größe der Lagerkraftkomponente unerheblich ist, wird die Montage des Stellantriebes erleichtert, da beim Einbau eines die Anlauffläche aufweisenden Bauteils in das Polgehäuse nicht auf dessen Ausrichtung geachtet werden muss.

Gemäß einer besonders bevorzugten Ausführungsform ist die erste Anlauffläche unmittelbar am Polgehäuse des elektrischen Antriebsmotors ausgebildet. Dabei kann die Anlauffläche beispielsweise durch Herausbiegen einer Lasche gebildet werden, insbesondere dann, wenn das Polgehäuse aus Metall ausgebildet ist. Falls das Polgehäuse beispielsweise im Metall-Druckgussverfahren hergestellt wird, muss die Polgehäuseform entsprechend ausgeformt werden. Alternativ dazu ist es denkbar, das Polgehäuse aus Kunststoff zu fertigen, wobei in diesem Fall die entsprechende Form zur Herstellung des Polgehäuses im Spritzguss- oder Pressformverfahren vorzugsweise eine der ersten Anlauffläche entsprechende formkongruente Ausformung umfasst.

Alternativ dazu ist es denkbar, die erste Anlauffläche an einem von dem Polgehäuse separaten Bauteil, insbesondere einer Anlaufscheibe auszubilden. Dabei ist das Bauteil, insbesondere die Anlaufscheibe, im montierten Zustand bevorzugt am Polgehäuse fixiert. Das die Anlauffläche aufweisende Bauteil kann als Toleranzausgleich zum Ausgleichen einer Axialtoleranz genutzt werden.

Erfindungsgemäß ist das erste Lager in einem insbesondere zylinderförmigen Fortsatz des Polgehäuses angeordnet, insbesondere in diesem festgelegt. Bevorzugt beträgt der Innendurchmesser des Fortsatzes zumindest näherungsweise dem Außendurchmesser des ersten Lagers. Fertigungstechnisch ist es vorteilhaft, den Fortsatz durch Tiefziehen herzustellen. Die erste Anlauffläche ist erfindungsgemäß an einem schrägen Boden des Fortsatzes vorgesehen.

Bevorzugt ist eine Ausführungsform, bei der sich die Motorankerwelle mit einem ballig ausgeformten Endabschnitt, insbesondere in der Form eines drehfest mit der Motorankerwelle verbundenen Anlaufpilzes an der Anlauffläche abstützt. Aufgrund der schrägen und/oder gekrümmten Ausbildung der Anlauffläche liegt die Motorankerwelle nicht zentrisch an der ersten Anlauffläche an, sondern mit Radialabstand zur Längsmittelachse der Motorankerwelle, so dass sich ein vergrößerter Reibradius ergibt, welcher die Selbsthemmung des Stellantriebs zusätzlich erhöht. Je schräger bzw. gekrümmter die erste Anlauffläche ausgebildet ist, desto größer ist der Reibradius, also der Radialabstand zwischen Anlagepunkt der Motorankerwelle und der Längsmittelachse der Motorankerwelle, wodurch in der Folge auch die Selbsthemmung größer ist.

Bevorzugt handelt es sich bei dem Antriebsmotor um einen in beide Drehrichtungen betreibbaren Antriebsmotor, so dass der Stellantrieb zum Verstellen einer Fensterscheibe in zwei Richtungen geeignet ist. Zur Realisierung einer stabilen, fliegenden Lagerung, ist bevorzugt zusätzlich zu dem ersten Lager ein, insbesondere als Radiallager ausgebildetes zweites Lager für die Motorankerwelle vorgesehen, wobei sich das zweite Lager mit Vorteil in einem Bereich axial zwischen dem Motoranker und der Getriebeschnecke befindet.

Um auch eine ausreichende Selbsthemmung des Stellantriebs für den Betriebsfall zu realisieren, dass die Motorankerwelle sich an einer der ersten Anlauffläche gegenüberliegenden zweiten Ablauffläche abstützt, ist mit Vorteil vorgesehen, dass die zweite Anlauffläche räumlich derart gangeordnet und/oder ausgeformt ist, dass auf das zweite Lager eine in radialer Richtung gerichtete Lagerkraftkomponente wirkt. Dabei kann die zweite Anlauffläche eben und geneigt, oder gekrümmt, vorzugsweise auch identisch wie dies erste Anlauffläche ausgebildet sein. Es ist denkbar, die zweite Anlauffläche an einem Getriebegehäuse oder an einem vom Getriebegehäuse separaten Bauteil, insbesondere einer Anlaufscheibe anzuordnen. Bevorzugt stützt sich die Motorankerwelle an der zweiten Anlauffläche mit einem ballig ausgeformaten, insbesondere als Anlaufpilz ausgebildeten Endabschnitt ab.

Ferner betrifft die Erfindung eine Fensterhebereinrichtung in einem Kraftfahrzeug, mit einem zuvor beschriebenen Stellantrieb. Bevorzugt ist die Fensterhebereinrichtung derart ausgebildet, dass sich die Motorwelle an der ersten Anlauffläche abstützt, wenn eine Fensterscheibe angehoben wird. Die Motorankerwelle stützt sich folglich an der zweiten Anlauffläche ab, wenn die Fensterscheibe abgesenkt wird.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: eine schematische Darstellung eines Stellantriebs einer Fensterhebereinrichtung, bei dem zwei aneinander gegenüberliegende Anlaufflächen für eine Motorankerwelle in Bezug auf die Längsmittelachse der Motorankerwelle geneigt sind und
- Fig. 2:: in einer vergrößerten Darstellung eine mögliche Ausbildung und Anordnung einer ersten Anlauffläche im Pohlgehäuse eines elektrischen Antriebsmotors.

### Ausführungsformen der Erfindung

In den Figuren sind gleiche Bauteile und Bauteile mit der gleichen Funktion mit den gleichen Bezugszeichen gekennzeichnet.

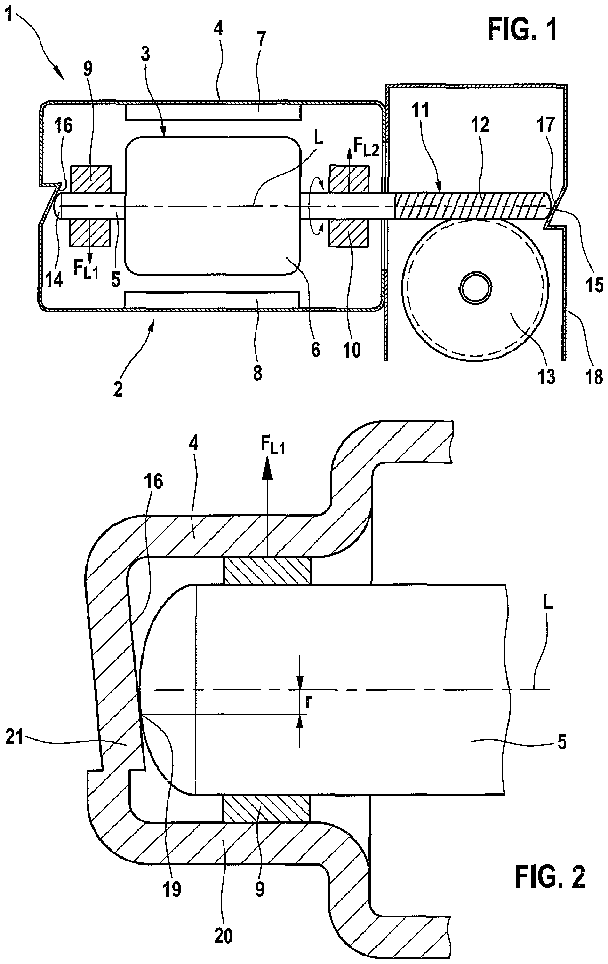

In Fig. 1 ist ein Ausschnitt einer Fensterhebereinrichtung 1 in einem Kraftfahrzeug gezeigt. Die Fensterhebereinrichtung 1 umfasst einen Stellantrieb 2 mit einem drehrichtungsumkehrbaren, elektrischen Antriebsmotor 3. Der innerhalb eines Polgehäuses 4 aus Metall (hier: Aluminiumdruckguss) angeordnete Antriebsmotor 4 umfasst eine Motorankerwelle 5, einen drehfest auf der Motorankerwelle 5 sitzenden Motoranker 6 (Ankerpaket) sowie mit dem Motoranker 6 zusammen wirkende Permanentmagnete 7, 8, die innerhalb des Pohlgehäuse 4 gehalten sind. Elektrische Anschlüsse sowie eine Kommutierungseinrichtung sind aus Übersichtlichkeitsgründen nicht gezeigt

Beidseitig des Motorankers 6 ist die Motorankerwelle 5 mit einem ersten und einem zweiten Lager 9, 10 gelagert. Beide Lager 9, 10 sind als reine Radiallager zur ausschließlichen Aufnahme von in radialer Richtung wirkenden Kräften ausgebildet. Die Motorankerwelle 5 durchsetzt das Polgehäuse 4 in der Zeichnungsebene rechts in axialer Richtung und ist in einem außerhalb des Polgehäuses 4 liegenden Bereich als Getriebeschnecke 11 mit einer Schneckenverzahnung 12 ausgebildet. Die Getriebeschnecke 11 kämmt mit einem Schneckenrad 13, welches insbesondere mittels eines Seilzuges (nicht dargestellt) mit einer Fensterscheibe wirkverbunden ist.

Wie sich insbesondere aus Fig. 1 ergibt, ist die Motorankerwelle 5 fliegend gelagert, d.h. es sind keine die Motorankerwelle 5 fest aufnehmenden Axiallager vorgesehen.

Die beiden stirnseitigen Endabschnitte 14, 15 der Motorankerwelle 5 werden von jeweils einem Anlaufpilz mit einer stirnseitigen, balligen, d.h. konvexen Krümmung gebildet. Dabei ist dem ersten Endabschnitt 14 eine erste Anlauffläche 16 am Polgehäuses 4 und dem zweiten Endabschnitt 15 eine zweite Ablauffläche 17 an einem Getriebegehäuse 18 zugeordnet. Die beiden Anlauffläche 16, 17 dienen zum Auffangen eines Axialschubes der Motorankerwelle 5, der insbesondere bei unter Last arbeitende Stellantrieb 2 auf die Motorankerwelle 5 ausgeübt wird. Der Stellantrieb 2 ist derart ausgebildet, dass sich die Motorankerwelle 5 mit ihrem ersten Endabschnitt 14 an der ersten Anlauffläche 16 abstützt, wenn eine mit der Fensterhebereinrichtung 1 betätigbare Fensterscheibe angehoben wird. Entsprechend stützt sich die Motorankerwelle 5 mit ihrem zweiten Endabschnitt 15 an der zweiten Anlauffläche 17 ab, wenn die Fensterscheibe abgesenkt wird.

Wie aus Fig. 1 zu erkennen ist, ist die erste Anlauffläche 16 eben ausgeformt und gegenüber der Längsmittelachse L der Motorankerwelle 5 geneigt, und zwar in der Zeichnungsebene nach unten weisend. Da die Motorankerwelle 5 die erste Anlauffläche 16 mit einer Axialkraft beaufschlagt, resultiert aus der schrägen Anordnung der ebenen, ersten Anlauffläche 16 eine auf das erste Lager 9 wirkende Lagerkraftkomponente F_{L1} quer, d.h. radial zur Längsmittelachse L der Motorankerwelle 5. Hierdurch vergrößert sich die Reibung zwischen der Motorankerwelle 5 und dem erstem Lager 9, wodurch die Selbsthemmung des Stellantriebs 2 der Fensterhebereinrichtung 1 für den Betriebsfall des Anhebens der Fensterscheibe verbessert wird.

Um zu erreichen, dass auch eine ausreichend große Selbsthemmung für den Betriebsfall realisiert ist, das die Fensterscheibe abgesenkt wird, ist auch die zweite, in diesem Ausführungsbeispiel ebenfalls ebene Anlauffläche 17 zur Längsmittelachse L der Motorankerwelle 5 geneigt. In diesem Ausführungsbeispiel ist die zweite, ebene Ablauffläche 17 in der Zeichnungsebene schräg nach oben gerichtet, wodurch bei einer axialen Beaufschlagung der zweiten Ablauffläche 17 durch die Motorankerwelle 5 auf das zweite Lager 10 die Lagerkraftkomponente F_{L2} quer zur Längsmittelachse L der Motorankerwelle 5 wird.

Aus einer vergrößerten Darstellung eines alternativen Ausführungsbeispiels gemäß Fig. 2 wird ein weiterer Effekt einer schräg angeordneten ersten Ablauffläche 16 deutlich. Auch bei diesem Ausführungsbeispiel ist die erste Anlaufflache 16 unmittelbar an dem Pohlgehäuse 4 angeordnet. Dabei ist die erste Anlauffläche 16 zur Längsmittelachse L der Motorankerwelle 5 oben geneigt und weist in der Zeichnungsebene nach rechts oben. Hierdurch verschiebt sich ein Kontaktpunkt 19 zwischen der Motorankerwelle 5 und der ersten Anlauffläche 16 von der Längsmittelachse L bei einer senkrecht zu der Längsmittelachse L verlaufenden Ablauffläche in radialer Richtung nach außen bei einer, wie dargestellt, geneigten ersten Ablauffläche 16. Hierdurch vergrößert sich ein Reibradius r, wodurch die Reibung zwischen der Motorankerwelle 5 und der Anlauffläche erhöht wird, mit der Folge, dass auch eine erhöhte Selbsthemmung des Stellantriebs 2 resultiert.

Ferner ist aus Fig.2 zu erkennen, dass das erste Lager 9 innerhalb eines tiefgezogenen Fortsatzes 20 des Polgehäuses angeordnet ist. Das erste Lager 9 ist mittels eines Presspassung innerhalb des Fortsatzes fixiert. Der zylinderförmige Fortsatz 20 weist endseitig einen Boden 21 auf, an dem die erste Anlauffläche 16 ausgebildet ist.

## Patentansprüche

1. Stellantrieb, insbesondere für eine Fensterhebereinrichtung (1) in einem Kraftfahrzeug, mit einem in einem Polgehäuse (4) angeordneten elektrischen Antriebsmotor (3) und einer diesem nachgeordneten Getriebeschnecke (11), die an einer fliegend gelagerten, sich an einer dem Pohlgehäuse (4) zugeordneten ersten Anlauffläche (16) in axialer Richtung abstützenden und einen Motoranker (6) tragenden Motorankerwelle (5) des Antriebsmotors (3) angeordnet ist, wobei ein erstes Lager (9) der Motorankerwelle (5) in einem Bereich axial zwischen der ersten Anlauffläche (16) und dem Motoranker (6) angeordnet ist,
wobei die erste Anlauffläche (16) räumlich derart angeordnet und/oder ausgeformt ist, dass auf das erste Lager (9) in radialer Richtung eine Lagerkraft-komponente (F_{L1}) wirkt, wobei die erste Anlauffläche (16) eben ausgeformt und in Bezug auf die Längsmittelachse (L) der Motorankerwelle (5) geneigt ist, **dadurch gekennzeichnet, dass** das erste Lager (9) in einem Fortsatz (20) des Polgehäuses (4) aufgenommen ist, wobei die erste Anlauffläche an einem schrägen Boden des Fortsatzes vorgesehen ist.

2. Stellantrieb nach Anspruch 1,
**dadurch gekennzeichnet,**
**dass** der Fortsatz (20) zylinderförmig ausgebildet ist.

3. Stellantrieb nach einem der Ansprüche 1 oder 2,
**dadurch gekennzeichnet,**
**dass** durch Variation des Neigungswinkels der ersten Anlauffläche (16) die Selbsthemmung des Stellantriebs (2) einstellbar ist.

4. Stellantrieb nach einem der vorhergehenden Ansprüche,
**dadurch gekennzeichnet,**
**dass** der Fortsatz (20) tiefgezogen ausgebildet ist.

5. Stellantrieb nach einem der vorhergehenden Ansprüche,
**dadurch gekennzeichnet,**
**dass** die erste Anlauffläche (16) unmittelbar an dem Polgehäuse (4) ausgebildet ist.

6. Stellantrieb nach einem der Ansprüche 1 bis 5,
**dadurch gekennzeichnet,**
**dass** ein Kontaktpunkt (19) zwischen der Motorankerwelle (5) und der ersten Anlauffläche (16) von der Längsmittelachse (L) der geneigten ersten Anlauffläche (16) nach außen verschoben ist, wodurch ein Reibradius (r), und damit die Reibung zwischen der Motorankerwelle (5) und der Anlauffläche erhöht wird.

7. Stellantrieb nach einem der vorhergehenden Ansprüche,
**dadurch gekennzeichnet,**
**dass** sich die Motorankerwelle (5) mit einem ballig ausgeformten Endabschnitt (14), insbesondere ein Anlaufpilz, an der ersten Anlauffläche (16) abstützt.

8. Stellantrieb nach einem der vorhergehenden Ansprüche,
**dadurch gekennzeichnet,**
**dass** der Antriebsmotor (3) drehrichtungsumschaltbar ist, und dass ein zweites Lager (10) der Motorankerwelle (5) in einem Bereich axial zwischen dem Motoranker (6) und der Getriebeschnecke (11) angeordnet ist.

9. Stellantrieb nach Anspruch 8,
**dadurch gekennzeichnet,**
**dass** eine der ersten Anlauffläche (16) gegenüberliegende zweite Anlauffläche (17) für die Motorankerwelle (5) vorgesehen ist, die räumlich derart angeordnet und/oder ausgeformt ist, dass auf das zweite Lager (10) in radialer Richtung eine Lagerkraftkomponente (F_{L2}) wirkt.

10. Stellantrieb nach Anspruch 9,
**dadurch gekennzeichnet**,
die zweite Anlauffläche (17) eben ausgeformt und in Bezug auf die Längsmittelachse (L) der Motorankerwelle (5) geneigt ist, und/ oder dass die zweite Anlauffläche (17) gekrümmt ausgeformt ist.

11. Fensterhebereinrichtung in einem Kraftfahrzeug mit einem Stellantrieb nach einem der vorhergehenden Ansprüche.

12. Fensterhebereinrichtung nach Anspruch 11,
**dadurch gekennzeichnet,**
**dass** sich die Motorankerwelle (15) an der ersten Anlauffläche (16) während des Hebevorgangs einer Fensterscheibe abstützt.

## Claims

1. Actuating drive, in particular for a window lifter device (1) in a motor vehicle, comprising an electric drive motor (3), which is arranged in a pole housing (4), and a gear worm (11), which is arranged downstream of the said electric drive motor and is arranged on a motor armature shaft (5) of the drive motor (3), which motor armature shaft is mounted in a floating manner, is supported on a first run-on face (16), which is associated with the pole housing (4), in the axial direction and is fitted with a motor armature (6), wherein a first bearing (9) of the motor armature shaft (5) is arranged in a region axially between the first run-on face (16) and the motor armature (6),
wherein the first run-on face (16) is physically arranged and/or formed in such a way that a bearing force component (F_{L1}) acts on the first bearing (9) in the radial direction, wherein the first run-on face (16) is formed in a planar manner and is inclined in relation to the longitudinal centre axis (L) of the motor armature shaft (5), **characterized in that** the first bearing (9) is accommodated in an extension (20) of the pole housing (4), wherein the first run-on face is provided on a sloping base of the extension.

2. Actuating drive according to Claim 1,
**characterized**
**in that** the extension (20) is of cylindrical design.

3. Actuating drive according to either of Claims 1 and 2,
**characterized**
**in that** the self-locking of the actuating drive (2) can be adjusted by varying the angle of inclination of the first run-on face (16).

4. Actuating drive according to one of the preceding claims,
**characterized**
**in that** the extension (20) is formed in a deep-drawn manner.

5. Actuating drive according to one of the preceding claims,
**characterized**
**in that** the first run-on face (16) is formed directly on the pole housing (4).

6. Actuating drive according to one of Claims 1 to 5,
**characterized**
**in that** a contact point (19) between the motor armature shaft (5) and the first run-on face (16) is shifted outwards from the longitudinal centre axis (L) of the inclined first run-on face (16), as a result of which a friction radius (r), and therefore the friction between the motor armature shaft (5) and the run-on face, is increased.

7. Actuating drive according to one of the preceding claims,
**characterized**
**in that** the motor armature shaft (5) is supported by a spherically shaped end section (14), in particular a run-on mushroom, on the first run-on face (16).

8. Actuating drive according to one of the preceding claims,
**characterized**
**in that** the drive motor (3) can be changed over in respect of the direction of rotation, and in that a second bearing (10) of the motor armature shaft (5) is arranged in a region axially between the motor armature (6) and the gear worm (11).

9. Actuating drive according to Claim 8,
**characterized**
**in that** a second run-on face (17), which is situated opposite the first run-on face (16), for the motor armature shaft (5) is provided, the said second run-on face being physically arranged and/or formed in such a way that a bearing force component (F_{L2}) acts on the second bearing (10) in the radial direction.

10. Actuating drive according to Claim 9,
**characterized**
**in that** the second run-on face (17) is formed in a planar manner and is inclined in relation to the longitudinal centre axis (L) of the motor armature shaft (5), and/or in that the second run-on face (17) is formed in a curved manner.

11. Window lifter device in a motor vehicle comprising an actuating drive according to one of the preceding claims.

12. Window lifter device according to Claim 11,
**characterized**
**in that** the motor armature shaft (15) is supported on the first run-on face (16) during the lifting process of a window pane.

## Revendications

1. Mécanisme de commande, en particulier pour un dispositif de lève-glace (1) dans un véhicule automobile, comprenant un moteur d'entraînement électrique (3) disposé dans un boîtier de générateur (4) et une vis sans fin de transmission (11) montée derrière celui-ci, qui est disposée au niveau d'un arbre d'induit de moteur (5) du moteur d'entraînement (3) monté en porte-à-faux, s'appuyant dans la direction axiale sur une première surface de butée (16) associée au boîtier de générateur (4) et portant un induit de moteur (6), un premier palier (9) de l'arbre de moteur (5) étant disposé dans une région située axialement entre la première surface de butée (16) et l'induit de moteur (6),
la première surface de butée (16) étant disposée et/ou formée spatialement de telle sorte qu'une première composante de force de palier (F_{L1}) agisse sur le premier palier (9) dans la direction radiale, la première surface de butée (16) étant formée sous forme plane et étant inclinée par rapport à l'axe médian longitudinal (L) de l'arbre d'induit de moteur (5), **caractérisé en ce que** le premier palier (9) est reçu dans une saillie (20) du boîtier de générateur (4), la première surface de butée étant prévue au niveau d'un fond oblique de la saillie.

2. Mécanisme de commande selon la revendication 1,
**caractérisé en ce que**
la saillie (20) est réalisée sous forme cylindrique.

3. Mécanisme de commande selon l'une quelconque des revendications 1 ou 2,
**caractérisé en ce que**
l'auto-blocage du mécanisme de commande (2) peut être ajusté en faisant varier l'angle d'inclinaison de la première surface de butée (16).

4. Mécanisme de commande selon l'une quelconque des revendications précédentes,
**caractérisé en ce que**
la saillie (20) est réalisée par emboutissage profond.

5. Mécanisme de commande selon l'une quelconque des revendications précédentes,
**caractérisé en ce que**
la première surface de butée (16) est réalisée directement sur le boîtier de générateur (4).

6. Mécanisme de commande selon l'une quelconque des revendications 1 à 5,
**caractérisé en ce**
**qu'**un point de contact (19) entre l'arbre d'induit de moteur (5) et la première surface de butée (16) est déplacé vers l'extérieur depuis l'axe médian longitudinal (L) de la première surface de butée inclinée (16), de sorte qu'un rayon de frottement (r), et par conséquent le frottement, entre l'arbre d'induit de moteur (5) et la surface de butée soit accru.

7. Mécanisme de commande selon l'une quelconque des revendications précédentes,
**caractérisé en ce que**
l'arbre d'induit de moteur (5) s'appuie sur la première surface de butée (16) au moyen d'une portion d'extrémité de forme bombée (14), en particulier un champignon de butée.

8. Mécanisme de commande selon l'une quelconque des revendications précédentes,
**caractérisé en ce que**
le sens de rotation du moteur d'entraînement (3) peut être inversé et **en ce qu'**un deuxième palier (10) de l'arbre d'induit de moteur (5) est disposé dans une région axialement entre l'induit de moteur (6) et la vis sans fin de transmission (11).

9. Mécanisme de commande selon la revendication 8,
**caractérisé en ce**
**qu'**il est prévu une deuxième surface de butée (17) opposée à la première surface de butée (16) pour l'arbre d'induit de moteur (5), laquelle est disposée et/ou formée spatialement de telle sorte qu'une composante de force de palier (F_{L2}) agisse dans la direction radiale sur le deuxième palier (10).

10. Mécanisme de commande selon la revendication 9,
**caractérisé en ce que**
la deuxième surface de butée (17) est formée sous forme plane et est inclinée par rapport à l'axe médian longitudinal (L) de l'arbre d'induit de moteur (5), et/ou **en ce que** la deuxième surface de butée (17) est formée sous forme courbe.

11. Dispositif de lève-glace dans un véhicule automobile, comprenant un mécanisme de commande selon l'une quelconque des revendications précédentes.

12. Dispositif de lève-glace selon la revendication 11,
**caractérisé en ce que**
l'arbre d'induit de moteur (15) s'appuie contre la première surface de butée (16) pendant l'opération de levage d'une vitre.
